# EUROPEAN PATENT APPLICATION

(11) **EP 4 502 839 A1**
(43) Date of publication of application: **05.02.2025**
(21) Application number: 23778227.1
(22) Date of filing: 28.03.2023
(51) Int. Cl.: G06F 21/53, G06F 21/60, G06F 21/62, G06F 16/18, G06F 16/27

(54) **MULTI-PARTY COMPUTATION METHOD AND SYSTEM BASED ON BLOCKCHAIN SYSTEM**

(30) Priority: 30.03.2022 CN 202210323732
(71) Applicant: China United Network Communications Group Company Limited, Beijing 100033 (CN)
(72) Inventor: JIA, Xiongwei, Beijing 100033 (CN)
(74) Representative: Canzler & Bergmeier Patentanwälte Partnerschaft mbB
(86) International application number: PCT/CN2023/084418
(87) International publication number: WO 2023/185862

(57) **Abstract**

The present disclosure relates to the technical field of communications. Provided are a multi-party computation method and system based on a blockchain system. The method comprises: a multi-party computation collaboration apparatus sending task information of a target computation task to a blockchain system; each multi-party computation participant apparatus acquiring the task information of the target computation task, extracting task computation data from a database dedicated to the multi-party computation participant apparatus and on the basis of a corresponding task data set index, loading and executing a multi-party computation model in a secure execution environment, and sending computation output information to the blockchain system; each multi-party computation participant apparatus sending task execution state information at least once to the multi-party computation collaboration apparatus; and the multi-party computation collaboration apparatus generating collaboration log information on the basis of the task execution state information sent by a plurality of multi-party computation participant apparatuses, and sending the collaboration log information to the blockchain system. By means of the present disclosure, the collaboration efficiency and credibility of multi-party computation can be improved.

## Description

### TECHNICAL FIELD

The present disclosure relates to the technical field of communications, and specifically relates to a multi-party computation method and a multi-party computation service system based on a blockchain system.

### BACKGROUND

Data security and privacy protection are constant focuses of attention of all parties in the data field, and proximal computation of data, data kept within a security domain, and the like have become important requirements of both data owners and data keepers. However, the data owner and the data keeper also have a motivation to cooperate with other parties to share and create value depending on their respective data. As a result, multi-party computation has become a popular trend.

However, there are still many problems to be addressed in current multi-party computation, especially in aspects of data security, privacy protection, computation credibility, convenient use, and the like, and a multi-party computation solution lacking comprehensive consideration will affect the popularization and use of multi-party computation.

### SUMMARY

In view of this, the present disclosure provides a multi-party computation method and system based on a blockchain system, aiming to solve problems of low multi-party computation efficiency and poor credibility caused by the fact that data security, privacy protection, computation credibility and convenient use are not comprehensively considered in multi-party computation in the related art.

To achieve the above object, a first aspect of the present disclosure provides a multi-party computation method based on a blockchain system, wherein the method is applied to a multi-party computation service system including a multi-party computation collaboration device and a plurality of multi-party computation participant devices, and the method includes: sending, by the multi-party computation collaboration device, task information of a target computation task to the blockchain system, wherein the task information includes a target computation task identification, a multi-party computation model, and a task data set index used by each multi-party computation participant device; for any one of the multi-party computation participant devices, acquiring, by the multi-party computation participant device, the task information of the target computation task; extracting, by the multi-party computation participant device, task computation data from a proprietary database of the multi-party computation participant device based on a corresponding task data set index; loading and executing, by the multi-party computation participant device, the multi-party computation model in a secure execution environment, to generate computation output information corresponding to the target computation task from the task computation data, wherein the computation output information includes computation result information and computation log information; sending, by the multi-party computation participant device, the computation output information to the blockchain system; sending, by the multi-party computation participant device in the process of loading and executing the multi-party computation model in the secure execution environment, task execution state information at least once to the multi-party computation collaboration device; and generating, by the multi-party computation collaboration device under a condition that each of the plurality of multi-party computation participant devices has completed the target computation task, collaboration log information based on the task execution state information sent from the plurality of multi-party computation participant devices, and sending the collaboration log information to the blockchain system.

Optionally, before for any one of the multi-party computation participant devices, acquiring, by the multi-party computation participant device, the task information of the target computation task, the method further includes: receiving, by the multi-party computation participant device, multi-party computation negotiation information sent from the multi-party computation collaboration device, wherein the multi-party computation negotiation information includes a target computation task identification, an identification of each multi-party computation participant device, a computation model requirement and a data set requirement; and returning, by the multi-party computation participant device, a negotiation result to the multi-party computation collaboration device based on device state information of the multi-party computation participant device and the multi-party computation negotiation information, the operation of sending, by the multi-party computation collaboration device, task information of the target computation task to the blockchain system includes: sending, by the multi-party computation collaboration device under a condition that all the multi-party computation participant devices return negotiation success results, the task information of the target computation task to the blockchain system.

Optionally, before receiving, by the multi-party computation participant device, multi-party computation negotiation information sent from the multi-party computation collaboration device, the method further includes: generating, by the multi-party computation participant device, at least one computation data index based on original data attributed to the multi-party computation participant device, wherein the computation data index includes at least one of a data identification, a data type, a data length, a data digest, or an index digest; sending, by the multi-party computation participant device, index registration information to the blockchain system, wherein the index registration information includes the at least one computation data index for performing index registration of the at least one computation data index by the blockchain system.

Optionally, after sending, by the multi-party computation participant device, task execution state information at least once to the multi-party computation collaboration device, the method further includes: sending, by the multi-party computation collaboration device, control information to a corresponding multi-party computation participant device based on the task execution state information; receiving, by the multi-party computation participant device, the control information sent from the multi-party computation collaboration device based on the task execution state information; and performing, by the multi-party computation participant device, a corresponding action based on the control information.

Optionally, the operation of loading and executing, by the multi-party computation participant device, the multi-party computation model in the secure execution environment, to generate computation output information corresponding to the target computation task from the task computation data includes: loading and executing, by the multi-party computation participant device, the multi-party computation model in the secure execution environment under a condition of determining that the multi-party computation model meets a pre-agreed model requirement; and in the process of executing the multi-party computation model, generating, by the multi-party computation participant device under a condition of determining that the task computation data meets a pre-agreed data requirement, computation output information corresponding to the target computation task according to the task computation data, wherein the computation output information further includes a public key signature of the multi-party computation collaboration device which is automatically generated after the multi-party computation model is executed.

Optionally, before sending, by the multi-party computation collaboration device, task information of the target computation task to the blockchain system, the method further includes: sending, by the multi-party computation collaboration device, multi-party computation registration information to the blockchain system, wherein the multi-party computation registration information includes one or more of at least one multi-party computation model, at least one multi-party computation task template, at least one multi-party computation task, or at least one contribution evaluation model for performing registration of one or more of the multi-party computation model, the multi-party computation task template, the multi-party computation task, or the contribution evaluation model, respectively, by the blockchain system.

Optionally, the method further includes: acquiring, by the multi-party computation collaboration device under a condition that each of the multi-party computation participant devices has completed the target computation task, task processing data corresponding to the target computation task from the blockchain system; generating, by the multi-party computation collaboration device, task contribution information based on the task processing data and a predetermined contribution evaluation model, wherein the task contribution information includes a contribution of each multi-party computation participant device in terms of the target computation task; and sending, by the multi-party computation collaboration device, the task contribution information to the blockchain system for finally determining, by the blockchain system, the contribution of each multi-party computation participant device for the target computation task based on the task contribution information sent from the multi-party computation collaboration device and the task contribution information sent from each multi-party computation participant device.

A second aspect of the present disclosure provides a multi-party computation service system, including a multi-party computation collaboration device and a plurality of multi-party computation participant devices, wherein each multi-party computation participant device includes: a first acquisition module, a first extraction module, a task processing module, a first synchronization module, and a first blockchain service agent module, the multi-party computation collaboration device includes: a second generation module and a second blockchain service agent module, the second blockchain service agent module is configured to send task information of a target computation task to the blockchain system, wherein the task information includes a target computation task identification, a multi-party computation model, and a task data set index used by each multi-party computation participant device; the first acquisition module is configured to acquire the task information of the target computation task; the first extraction module is configured to extract task computation data from a proprietary database of the multi-party computation participant device based on a corresponding task data set index; the task processing module is configured to load and execute the multi-party computation model in a secure execution environment, to generate computation output information corresponding to the target computation task from the task computation data, wherein the computation output information includes computation result information and computation log information; the first blockchain service agent module is configured to send the computation output information to the blockchain system; the first synchronization module is configured to send, in the process of loading and executing the multi-party computation model in the secure execution environment by the task processing module, task execution state information at least once to the multi-party computation collaboration device; the second generation module is configured to generate, under a condition that each of the plurality of multi-party computation participant devices has completed the target computation task, collaboration log information based on the task execution state information sent from the plurality of multi-party computation participant devices; and the second blockchain service agent module is further configured to send the collaboration log information to the blockchain system.

Optionally, each multi-party computation participant device further includes a first task management module, the first task management module is configured to receive multi-party computation negotiation information sent from the multi-party computation collaboration device, and return a negotiation result to the multi-party computation collaboration device based on device state information of the multi-party computation participant device and the multi-party computation negotiation information, wherein the multi-party computation negotiation information includes a target computation task identification, an identification of each multi-party computation participant device, a computation model requirement and a data set requirement; and the second blockchain service agent module is configured to send, under a condition that all the multi-party computation participant devices return negotiation success results, the task information of the target computation task to the blockchain system.

Optionally, each multi-party computation participant device further includes a first data management module, the first data management module is configured to generate at least one computation data index based on original data attributed to the multi-party computation participant device, and send index registration information to the blockchain system, wherein the index registration information includes the at least one computation data index for performing index registration of the at least one computation data index by the blockchain system, and the computation data index includes at least one of a data identification, a data type, a data length, a data digest, or an index digest.

Optionally, the multi-party computation collaboration device further includes a second contribution evaluation module, the second blockchain service agent module is further configured to acquire, under a condition that each of the multi-party computation participant devices has completed the target computation task, task processing data corresponding to the target computation task from the blockchain system; the second contribution evaluation module is configured to generate task contribution information based on the task processing data and a predetermined contribution evaluation model, wherein the task contribution information includes a contribution of each multi-party computation participant device in terms of the target computation task; and the second blockchain service agent module is further configured to send the task contribution information to the blockchain system for finally determining, by the blockchain system, the contribution of each multi-party computation participant device for the target computation task based on the task contribution information and the task contribution information sent from each multi-party computation participant device.

In the multi-party computation method applied to the multi-party computation service system provided in the embodiments of the present disclosure, the multi-party computation collaboration device sends task information of a target computation task to the blockchain system, the target computation task information includes a target computation task identification, a multi-party computation model, and a task data set index used by each multi-party computation participant device, and the multi-party computation participant device acquires the task information of the target computation task, and extracts task computation data from a proprietary database of the multi-party computation participant device based on a task data set index. That is, the target computation task can be computed based on task data sets agreed by all parties, so that only index information of the task data sets, instead of the task data sets themselves, are shared. Therefore, data privacy of each multi-party computation participant device is protected, and convenient use of the data is facilitated. Then, the multi-party computation participant device loads and executes the multi-party computation model in a secure execution environment, to generate computation output information corresponding to the target computation task from the task computation data, and sends computation output information to the blockchain system. That is, the respective multi-party computation participant devices can execute according to the same multi-party computation model to ensure certainty and consistency of the computation, as well as credibility of the computation output information, while the secure execution environment (such as a secure container) also plays a role of a sandbox, so that data, storage and communication security of the multi-party computation participant devices is guaranteed. The multi-party computation participant device sends, in the process of loading and executing the multi-party computation model in the secure execution environment, task execution state information at least once to the multi-party computation collaboration device, and the multi-party computation collaboration device generates, under a condition that each of the plurality of multi-party computation participant devices has completed the target computation task, collaboration log information based on the task execution state information sent from the plurality of multi-party computation participant devices, and sends the collaboration log information to the blockchain system, so that data privacy of each multi-party computation participant device participating in the target computation task and the multi-party computation collaboration device can be protected, and the multi-party computation can be more credible.

### BRIEF DESCRIPTION OF DRAWINGS

Accompanying drawings are provided for further understanding of the present disclosure and constitute a part of the specification. Hereinafter, these drawings are intended to explain the present disclosure together with the following specific implementations, but should not be considered as a limitation of the present disclosure.
FIG. 1 is a flowchart of a multi-party computation method based on a blockchain system according to an embodiment of the present disclosure;
FIG. 2 is a flowchart of a method for determining a contribution according to an embodiment of the present disclosure;
FIG. 3 is a flowchart of another multi-party computation method based on a blockchain system according to an embodiment of the present disclosure;
FIG. 4 is a schematic structural diagram of a multi-party computation participant device according to an embodiment of the present disclosure;
FIG. 5 is a schematic structural diagram of a multi-party computation collaboration device according to an embodiment of the present disclosure; and
FIG. 6 is a schematic structural diagram of a multi-party computation service system according to an embodiment of the present disclosure.

### DETAIL DESCRIPTION OF EMBODIMENTS

Hereinafter, specific implementations of the present disclosure will be described with respect to the accompanying drawings. It will be appreciated that the specific implementations as set forth herein are merely for the purpose of illustration and explanation of the present disclosure and should not be constructed as a limitation thereof.

As used in the present disclosure, the term "and/or" includes any and all combinations of one or more of the associated listed items.

The terminology used herein is for the purpose of describing specific embodiments only and is not intended to limit the present disclosure. As used in the present disclosure, the singular forms "a", "an" and "the" are intended to include the plural forms as well, unless the context clearly indicates otherwise.

When used herein, the terms "comprise" and/or "consist of ..." specify the presence of stated features, integers, steps, operations, elements, and/or components, but do not preclude the presence or addition of one or more other features, integers, steps, operations, elements, components, and/or groups thereof.

Embodiments of the present disclosure may be described with reference to plan and/or sectional views in idealized representations of the present disclosure. Accordingly, the example illustrations may be modified in accordance with the manufacturing process and/or the tolerance.

Unless otherwise defined, all terms (including technical and scientific terms) used in the present disclosure have the same meaning as commonly understood by one of ordinary skill in the art. It will be further understood that terms, such as those defined in commonly used dictionaries, should be interpreted as having a meaning that is consistent with their meaning in the context of the existing art and the present disclosure, and will not be interpreted in an idealized or overly formal sense unless expressly so defined in the present disclosure.

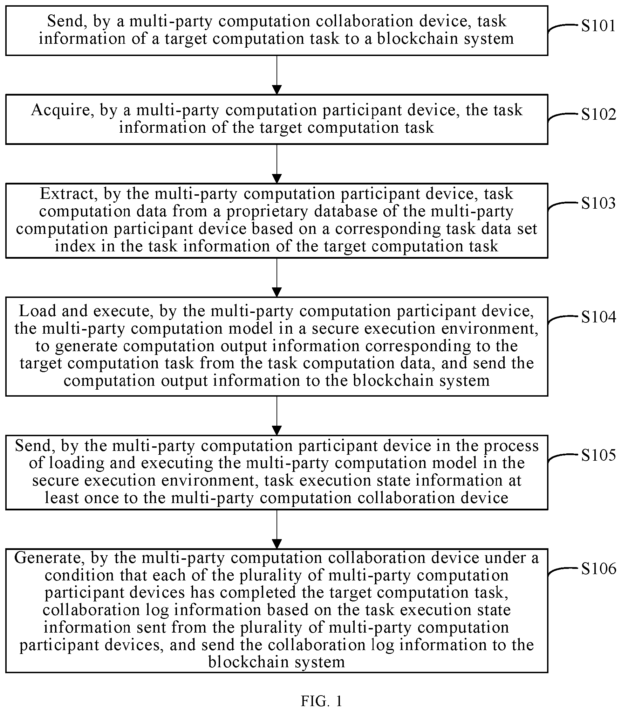

FIG. 1 is a flowchart of a multi-party computation method based on a blockchain system according to an embodiment of the present disclosure. The multi-party computation method is applied to a multi-party computation service system including a multi-party computation collaboration device and a plurality of multi-party computation participant devices.

As shown in FIG. 1, the multi-party computation method based on a blockchain system includes the following operations S101 to S106.

At operation S101, sending, by a multi-party computation collaboration device, task information of a target computation task to the blockchain system.

The task information of the target computation task includes a target computation task identification, a multi-party computation model, and a task data set index used by each multi-party computation participant device. The target computation task identification is used for identifying the target computation task uniquely. The multi-party computation model is executable text or executable binary code, which may be stored in a blockchain system in a form of a smart contract, or may be represented by and stored in other executable modules. The task data set index is an index corresponding to a data set required for computation of the multi-party computation task. It should be noted that since the target computation task is a multi-party computation task, the task information of the target computation task usually includes a plurality of task data set indexes, and task computation data corresponding to different task data set indexes may be owned by different multi-party computation participant devices.

At operation S102, acquiring, by a multi-party computation participant device, the task information of the target computation task.

For any one of the multi-party computation participant devices, the multi-party computation participant device acquires the task information of the target computation task. The target computation task is a current multi-party computation task to be computed, and the multi-party computation task refers to a task to be computed by a plurality of multi-party computation participant devices with data attributed to these multi-party computation participant devices, respectively.

The task information of the target computation task includes a target computation task identification, a multi-party computation model, and a task data set index used by each multi-party computation participant device.

In some implementations, the task information of the target computation task further includes one or more of a target computation task type, a target computation task parameter, an interaction mode, device information of each multi-party computation participant device participating in the computation, device information of the multi-party computation collaboration device, communication channel data encryption information, or the like.

The computation task type includes, for example, one-time computation or multiple-time repetitive computation, the interaction mode includes information interaction mode between one multi-party computation participant device and the blockchain system, another multi-party computation participant device, or the multi-party computation collaboration device, respectively. The device information of each multi-party computation participant device includes an identification of the multi-party computation participant device, a certificate of the multi-party computation participant device, and the like. The device information of the multi-party collaboration device includes an identification of the multi-party computation collaboration device, a certificate of the multi-party computation collaboration device, and the like. The communication channel data encryption information includes data encryption and decryption methods, encryption and decryption configuration parameters, encryption and decryption keys, and the like.

In one implementation, before acquiring, by the multi-party computation participant device, the task information of the target computation task, the method further includes: sending, by the multi-party computation participant device, computing device registration information to the blockchain system, so that the blockchain system performs registration of the device.

The computing device registration information includes an identification of the multi-party computation participant device, a public key, a certificate, a supported digest, an encryption algorithm and the like, where a private key of each multi-party computation participant device is kept by the multi-party computation participant device itself.

In another implementation, before acquiring, by the multi-party computation participant device, the task information of the target computation task, the method further includes: sending, by the multi-party computation participant device, computing device registration information to the multi-party computation collaboration device, so that the multi-party computation collaboration device performs registration of the device.

The computing device registration information includes an identification of the multi-party computation participant device, a public key, a certificate, a supported digest, an encryption algorithm and the like, where a private key of each multi-party computation participant device is kept by the multi-party computation participant device itself.

It should be noted that in this implementation, the multi-party computation collaboration device can directly manage the device registration information of the multi-party computation participant device, instead of through the blockchain system.

In this implementation, the multi-party computation collaboration device may send collaboration device registration information to the blockchain system, so that the blockchain system registers the multi-party computation collaboration device based on the collaboration device registration information. The collaboration device registration information includes an identification of the multi-party computation collaboration device, a public key, a certificate, a supported digest, an encryption algorithm and the like where a private key of the multi-party computation collaboration device is kept by the multi-party computation collaboration device itself. The multi-party computation collaboration device generates a digest of the collaboration device registration information according to a pre-agreed rule, and signs the digest by the private key of the multi-party computation collaboration device. The signed digest is used as a component of the collaboration device registration information. Each node (e.g., each multi-party computation participant device) in the blockchain system may identify the multi-party computation collaboration device through information, such as the digest, in the collaboration device registration information of the multi-party computation collaboration device.

Further, the multi-party computation collaboration device may send multi-party computation registration information to the blockchain system. The multi-party computation registration information includes one or more of at least one multi-party computation model, at least one multi-party computation task template, at least one multi-party computation task, or at least one contribution evaluation model for performing registration of one or more of the multi-party computation model, the multi-party computation task template, the multi-party computation task, or the contribution evaluation model, respectively, by the blockchain system.

In one implementation, before for any one of the multi-party computation participant devices, acquiring, by the multi-party computation participant device, the task information of the target computation task, the method further includes the following first and second operations.

At the first operation, generating, by the multi-party computation participant device, at least one computation data index based on original data attributed to the multi-party computation participant device.

The computation data index is used for identifying and verifying the original data. The computation data index includes at least one of a data identification, a data type, a data length, a data digest, or an index digest.

The data identifier is used for identifying the original data uniquely. The data length may be expressed in number of bytes. The data digest is digest information generated according to a pre-agreed rule and original data, and may be signed or encrypted by the private key of the multi-party computation participant device. The index digest is digest information generated according to a pre-agreed rule and the data index, and may be signed or encrypted by the private key of the multi-party computation participant device.

It should be noted that the original data attributed to the multi-party computation participant device may be data which has been subjected to pre-processing such as redundancy removal, normalization, or the like. The data digest is used for retrieving and confirming original data corresponding to the computation data index. The index digest is used for confirming that the computation data index is complete and unmodified.

In one implementation, under a condition that a plurality of computation data indexes are generated, the multi-party computation participant device may further generate, from some or all of the plurality of computation data indexes, a data set index including some or all of the computation data indexes. For example, one data set index is generated from computation data indexes including data of the same type. According to this implementation, the convenient use of data can be facilitated, and thereby the efficiency of the multi-party computation can be improved.

At the second operation, sending, by the multi-party computation participant device, index registration information to the blockchain system. The index registration information includes the at least one computation data index for performing index registration of the at least one computation data index by the blockchain system.

It should be noted that since only the computation data index is sent from multi-party computation participant device to the blockchain system, nodes of the blockchain system can only know the computation data that is owned by the multi-party computation participant device and available for multi-party computation, but cannot obtain and use the computation data that is attributed to the multi-party computation participant device, so that the possibility of computation data leakage can be effectively reduced, and the security of the computation data owned by the multi-party computation participant device can be guaranteed.

In one implementation, the index registration information may further include at least one data set index, so that the blockchain system performs index registration of the at least one data set index.

In one implementation, after the multi-party computation participant device performing the index registration, the method further includes the following third to fourth operations.

At the third operation, receiving, by the multi-party computation participant device, multi-party computation negotiation information sent from the multi-party computation collaboration device.

The multi-party computation negotiation information includes a target computation task identification, an identification of each multi-party computation participant device, a computation model requirement and a data set requirement. The target computation task identification is used for uniquely identifying a current target computation task to be computed. The identification of each multi-party computation participant device is an identification of each multi-party computation participant device participating in collaborative computation of the target computation task. The computation model requirement is a device requirement to be met for running a multi-party computation model corresponding to the target computation task. The data set requirement is a data requirement to be met by a multi-party computation data set used in the target computation task, for example, a requirement on such as a data type in the data set.

At the fourth operation, returning, by the multi-party computation participant device, a negotiation result to the multi-party computation collaboration device based on device state information of the multi-party computation participant device and the multi-party computation negotiation information, so that the multi-party computation collaboration device sends, under a condition that all the multi-party computation participant devices return negotiation success results, the task information of the target computation task to the blockchain system.

The device state information is state information of the multi-party computation participant device, including capabilities and data sets owned by the device, or the like.

In one implementation, the operation of returning, by the multi-party computation participant device, the negotiation result to the multi-party computation collaboration device based on device state information of the multi-party computation participant device and the multi-party computation negotiation information includes: judging, by the multi-party computation participant device, whether the multi-party computation participant device supports operation of the multi-party computation model based on the capabilities owned by the multi-party computation participant device and the computation model requirement; and judging, by the multi-party computation participant device, whether the original data owned by the multi-party computation participant device meets the data set requirement based on the data sets owned by the multi-party computation participant device and the data set requirement. Under a condition that both the computation model requirement and the data set requirement are met, the generated and returned negotiation result is a negotiation success result; and under a condition that either of the computation model requirement and the data set requirement is not met, the generated and returned negotiation result is a negotiation failure result.

In one implementation, both the multi-party computation participant device and the multi-party computation collaboration device can store information related to the collaboration process in the blockchain system, so as to facilitate subsequent tracing when necessary. For example, the information related to the collaboration process includes the multi-party computation negotiation information, the negotiation result, and the like as described above.

In one implementation, the operation of acquiring, by the multi-party computation participant device, the task information of the target computation task includes: receiving, by the multi-party computation participant device, the task information of the target computation task sent from the multi-party computation collaboration device; or sending, by the multi-party computation participant device, a task information acquisition request to the multi-party computation collaboration device; and receiving the task information of the target computation task returned by the multi-party computation collaboration device in response to the task information acquisition request, where the task information acquisition request includes a target computation task identification.

In another implementation, under the condition that all the multi-party computation participant devices return negotiation success results, the multi-party computation collaboration device sends task information of a target computation task to the blockchain system. Therefore, in one implementation, the operation of acquiring, by the multi-party computation participant device, the task information of the target computation task may include: acquiring, by the multi-party computation participant device, the task information of the target computation task from the blockchain system.

At operation S 103, extracting, by the multi-party computation participant device, task computation data from a proprietary database of the multi-party computation participant device based on a corresponding task data set index in the task information of the target computation task.

The proprietary database of the multi-party computation participant device is a database in which only the multi-party computation participant device is authorized to perform read/write operations, and data stored in the database is attributed to the multi-party computation participant device.

It should be noted that since the task computation data is provided by the multi-party computation participant device, the task computation data participating in the computation is "available but invisible" to the multi-party computation collaboration device, while for the multi-party computation participant device, the task computation data participating in the computation is both visible and available. Since the task data set index participating in the computation is provided by the multi-party computation participant device itself, the index information may be not downloaded from the blockchain system any more. However, the multi-party computation participant device may know which data sets of other multi-party computation participant devices will participate in the computation of the target computation task.

At operation S104, loading and executing, by the multi-party computation participant device, the multi-party computation model in a secure execution environment, to generate computation output information corresponding to the target computation task from the task computation data, and sending the computation output information to the blockchain system.

The secure execution environment includes a software environment such as a secure container or a secure virtual machine, and a hardware environment such as a secure chip. The computation output information includes computation result information and computation log information. The computation log information includes at least one of an execution condition, a computed data set, a count of computations, a computation duration, or the like.

In one implementation, in a case where the target computation task is a multiple-time repetitive computation task, the computation result information includes a plurality of computation results.

In one implementation, after being loaded and executed by the multi-party computation participant device, the multi-party computation model interacts with other modules in the multi-party computation participant device via a unified interface, to obtain task computation data, or store and exchange computation results (including intermediate results), and the like.

At operation S105, sending, by the multi-party computation participant device in the process of loading and executing the multi-party computation model in the secure execution environment, task execution state information at least once to the multi-party computation collaboration device.

The task execution state information is information for characterizing an execution progress and an execution condition of the task in the multi-party computation participant device. The task execution state information includes at least one of a model loading state, a model execution state, an intermediate result, or computation output information. The model loading state includes, for example, loading succeed or loading failed; and the model execution state includes, for example, execution succeed or execution failed. The intermediate result is a computation result generated when the target computation task is a multiple-time repetitive computation task.

It should be noted that since the target computation task may be a multiple-time repetitive computation task, the multi-party computation participant device may send the task execution state information to the multi-party computation collaboration device once each time the computation is completed, so that the multi-party computation collaboration device can know the task execution state of the multi-party computation participant device in time.

In one implementation, after sending, by the multi-party computation participant device, task execution state information at least once to the multi-party computation collaboration device, the method further includes: sending, by the multi-party computation collaboration device, control information to a corresponding multi-party computation participant device based on the task execution state information; receiving, by the multi-party computation participant device, the control information sent from the multi-party computation collaboration device based on the task execution state information; and performing, by the multi-party computation participant device, a corresponding action based on the control information.

The control information includes command information for starting or stopping the target computation task, or may include a command for updating information such as computation parameters of the target computation task.

It should be noted that when the target computation task is a multiple-time repetitive computation task, the multi-party computation participant device performs computation for multiple times, and exchanges parameters, such as intermediate computation results, with other multi-party computation participant devices during the computation through the multi-party computation collaboration device. Meanwhile, in order for successful execution of the target computation task, the multi-party computation collaboration device may actively send a task evaluation notification and parameters to the multi-party computation participant device to check and determine the execution effect. Termination of the target computation task may be based on a preset computation termination condition, or may be decided by the multi-party computation collaboration device in terms of whether and when to terminate. In a multiple-time repetitive multi-party computation task, each multi-party computation participant device may perform independent computation based on its own data and information such as parameters transmitted from the multi-party computation collaboration device.

In some embodiments, during execution of the target computation task, the multi-party computation participant device may communicate with the multi-party computation collaboration device in an encrypted manner, such as the conventional security socket layer (SSL) encrypted communication or other encrypted communication methods.

In some embodiments, the multi-party computation collaboration device may encrypt communication channel data with a public key of each respective multi-party computation participant device, and accordingly, the multi-party computation participant device may decrypt the channel data with its own private key to obtain unencrypted communication channel data. For the same target computation task, the multi-party computation collaboration device may interact with different multi-party computation participant devices by different key systems or keys. While executing the target computation task, for the communication data to be interacted with the multi-party computation collaboration device or the communication data to be stored in the blockchain system, the multi-party computation participant device may encrypt the communication channel data by the public key of the multi-party computation collaboration device, or with an encryption method, parameters and encryption and decryption keys which are agreed in advance.

In some embodiments, while processing the target computation task, for the communication data to be interacted with the multi-party computation collaboration device or the communication data to be stored in the blockchain system, the multi-party computation participant device may compute a digest according to a pre-agreed digest computation method, and sign the digest of the communication data by its own private key, to indicate that the data is generated and uploaded by that particular multi-party computation participant device. After obtaining the communication data uploaded by that particular multi-party computation participant device, another multi-party computation participant device and the multi-party computation collaboration device verify the digest of the communication data by the public key of that particular multi-party computation participant device, and then verify whether the communication data is generated and uploaded by that particular multi-party computation participant device.

In one implementation, the operation of loading and executing, by the multi-party computation participant device, the multi-party computation model in the secure execution environment, to generate computation output information corresponding to the target computation task from the task computation data includes the following first to second operations.

At the first operation, verifying, by the multi-party computation participant device, whether the multi-party computation model meets a pre-agreed model requirement, and loading and executing the multi-party computation model in the secure execution environment under a condition of determining that the multi-party computation model meets the pre-agreed model requirement.

The pre-agreed model requirement is a requirement to be met by the multi-party computation model. The multi-party computation model has a signature of the multi-party computation collaboration device, so that a source and validity of the multi-party computation model can be verified according to the signature of the multi-party computation collaboration device on the multi-party computation model, and thus, whether the multi-party computation model meets the pre-agreed model requirement is determined.

In some implementations, verifying whether the multi-party computation model meets the pre-agreed model requirement includes: determining, under a condition that the signature of the multi-party computation collaboration device is correct, that the multi-party computation model meets the pre-agreed model requirement; and determining, under a condition that the signature of the multi-party computation collaboration device is incorrect, that the multi-party computation model does not meet the pre-agreed model requirement. By this operation, the possibility of the multi-party computation participant device running an insecure model can be reduced, the probability of the multi-party computation participant device being attacked is reduced, and the security of the multi-party computation process is improved.

In some implementations, verifying whether the multi-party computation model meets the pre-agreed model requirement may be further implemented by information such as a type of the multi-party computation model, a digest of the multi-party computation model, a public key of the multi-party computation collaboration device, or the like. The digest of the multi-party computation model is additional information stored in the blockchain system along with the multi-party computation model when the multi-party computation collaboration device registers the multi-party computation model, which may further include an identification of the multi-party computation model, and the digest of the multi-party computation model is signed by the multi-party computation collaboration device by its own private key.

At the second operation, verifying, by the multi-party computation participant device in the process of executing the multi-party computation model, whether the task computation data meets a pre-agreed data requirement, and generating, under a condition of determining that the task computation data meets the pre-agreed data requirement, computation output information corresponding to the target computation task according to the task computation data.

Verifying whether the task computation data meets the pre-agreed data requirement includes, for example, verifying whether task computation data provided by a multi-party computation participant device is within a pre-agreed data range; determining, under a condition that the task computation data is within the pre-agreed data range, that the task computation data meets the pre-agreed data requirement; and determining, under a condition that the task computation data is beyond the pre-agreed data range, that the task computation data does not meet the pre-agreed data requirement.

In one implementation, the computation output information may further include a public key signature of the multi-party computation collaboration device which is automatically generated after the multi-party computation model is executed. For example, digest information of the computation output information is generated and encrypted by the public key of the multi-party computation collaboration device. By this implementation, the multi-party computation participant device cannot modify the computation result information and computation log information generated by running the multi-party computation model.

It should be noted that the computation result information and computation log information generated by executing the multi-party computation model are transparent to the multi-party computation participant device itself, and can be output only by the multi-party computation participant device, so that data privacy of each multi-party computation participant device is guaranteed. After confirming that the computation result information and the computation log information are correct, the multi-party computation participant device may generate and add digest information on the computation output information, and encrypt the digest information with its own private key. The encrypted digest information is used as a component of the computation output information to indicate that the computation output information is from that particular multi-party computation participant device. It should be noted that the multi-party computation participant device may perform the foregoing operations on the computation result information and the computation log information in the computation output information respectively, which is beneficial to data privacy protection of the multi-party computation participant device.

At operation S 106, generating, by the multi-party computation collaboration device under a condition that each of the plurality of multi-party computation participant devices has completed the target computation task, collaboration log information based on the task execution state information sent from the plurality of multi-party computation participant devices, and sending the collaboration log information to the blockchain system.

It should be noted that since the target computation task may be a multiple-time repetitive computation task, the multi-party computation participant device may send the task execution state information to the multi-party computation collaboration device once each time the computation is completed. The multi-party computation collaboration device may receive at least once the task execution state information sent from each multi-party computation participant device in the process of loading and executing the multi-party computation model in the secure execution environment. The task execution state information is used for characterizing an execution progress and an execution condition of the task in the multi-party computation participant device. The task execution state information includes at least one of a model loading state, a model execution state, an intermediate result, or computation output information.

It should be noted that when the target computation task is a multiple-time repetitive computation task, the multi-party computation participant device performs computation for multiple times, and exchanges parameters, such as intermediate computation results, with other multi-party computation participant devices during the computation through the multi-party computation collaboration device. Meanwhile, in order for successful execution of the target computation task, the multi-party computation collaboration device may actively send a task evaluation notification and parameters to the multi-party computation participant device to check and determine the execution effect. Termination of the target computation task may be based on a preset computation termination condition, or may be decided by the multi-party computation collaboration device in terms of whether and when to terminate. In a multiple-time repetitive multi-party computation task, each multi-party computation participant device may perform independent computation based on its own data and information such as parameters transmitted from the multi-party computation collaboration device.

In some embodiments, during execution of the target computation task, the multi-party computation participant device may communicate with the multi-party computation collaboration device in an encrypted manner, such as the conventional security socket layer (SSL) encrypted communication or other encrypted communication methods.

In some embodiments, the multi-party computation collaboration device may encrypt communication channel data with a public key of each respective multi-party computation participant device, and accordingly, the multi-party computation participant device may decrypt the channel data with its own private key to obtain unencrypted communication channel data. For the same target computation task, the multi-party computation collaboration device may interact with different multi-party computation participant devices by different key systems or keys. While executing the target computation task, for the communication data to be interacted with the multi-party computation collaboration device or the communication data to be stored in the blockchain system, the multi-party computation participant device may encrypt the communication channel data by the public key of the multi-party computation collaboration device, or with an encryption method, parameters and encryption and decryption keys which are agreed in advance.

In the multi-party computation method applied to the multi-party computation service system provided in the embodiments of the present disclosure, the multi-party computation collaboration device sends task information of a target computation task to the blockchain system, the target computation task information includes a target computation task identification, a multi-party computation model, and a task data set index used by each multi-party computation participant device, and the multi-party computation participant device acquires the task information of the target computation task, and extracts task computation data from a proprietary database of the multi-party computation participant device based on a task data set index. That is, the target computation task can be computed based on task data sets agreed by all parties, so that only index information of the task data sets, instead of the task data sets themselves, are shared. Therefore, data privacy of each multi-party computation participant device is protected, and convenient use of the data is facilitated. Then, the multi-party computation participant device loads and executes the multi-party computation model in a secure execution environment, to generate computation output information corresponding to the target computation task from the task computation data, and sends computation output information to the blockchain system. That is, the respective multi-party computation participant devices can execute according to the same multi-party computation model to ensure certainty and consistency of the computation, as well as credibility of the computation output information, while the secure execution environment (such as a secure container) also plays a role of a sandbox, so that data, storage and communication security of the multi-party computation participant devices is guaranteed. The multi-party computation participant device sends, in the process of loading and executing the multi-party computation model in the secure execution environment, task execution state information at least once to the multi-party computation collaboration device, and the multi-party computation collaboration device generates, under a condition that each of the plurality of multi-party computation participant devices has completed the target computation task, collaboration log information based on the task execution state information sent from the plurality of multi-party computation participant devices, and sends the collaboration log information to the blockchain system, so that data privacy of each multi-party computation participant device participating in the target computation task and the multi-party computation collaboration device can be protected, and the multi-party computation can be more credible.

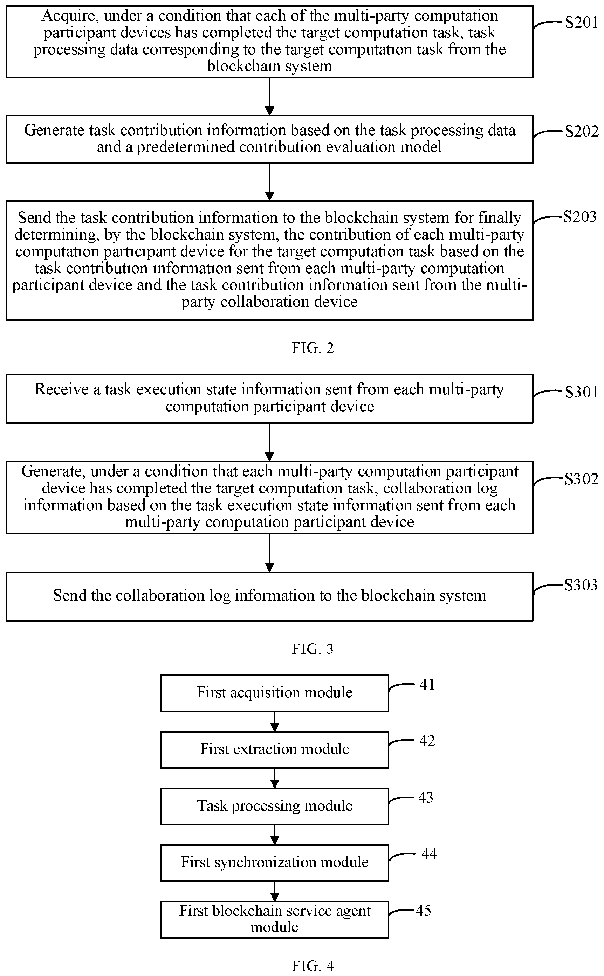

FIG. 2 is a flowchart of a method for determining a contribution according to an embodiment of the present disclosure. The method is applied to a multi-party computation participant device, and in one implementation, as shown in FIG. 2, the method for determining a contribution includes the following operations S201 to S203.

At operation S201, acquiring, under a condition that each of the multi-party computation participant devices has completed the target computation task, task processing data corresponding to the target computation task from the blockchain system.

The task processing data includes computation output information sent from each multi-party computation participant device, and collaboration log information sent from the multi-party computation collaboration device. The blockchain system ensures the security and consistency of the stored data of each party (such as the multi-party computation collaboration device and each multi-party computation participant device) participated in the target computation task.

In one implementation, after the task processing data corresponding to the target computation task is obtained from the blockchain system, identity information, such as a verification signature, of each multi-party computation participant device and the multi-party computation collaboration device is checked. When the identity information of each multi-party computation participant device and the multi-party computation collaboration device is verified, the following operation S202 is performed.

At operation S202, generating task contribution information based on the task processing data and a predetermined contribution evaluation model.

The contribution evaluation model is a model for enabling each contribution computation party (such as the multi-party computation collaboration device and each multi-party computation participant device) to perform contribution computation with a unified computation standard, and the contribution computation model is typically stored in an executable code form (such as a smart contract). The task contribution information includes a contribution of each multi-party computation participant device in terms of the target computation task.

In some embodiments, the contribution may be computed in various methods, such as by an effective contribution ratio.

The effective contribution ratio is associated with parameters such as a total computation amount, an actual computation amount, an effective computation amount and data validity. The data validity is determined by comparing the correlation of the actual computation data with the data sets of the multi-party computation task. When the multi-party computation task is executed, the supporting data sets may be appointed.

In one implementation scenario, the contribution is a ratio of an effective contribution to a total effective contribution, where the total effective contribution is a sum of effective contributions of all the multi-party computation participant devices, and the effective contribution is a sum of a product of a computation data amount and a count of computations and the number of updated and accepted parameters.

At operation S203, sending the task contribution information to the blockchain system for finally determining, by the blockchain system, the contribution of each multi-party computation participant device for the target computation task based on the task contribution information sent from each multi-party computation participant device and the task contribution information sent from the multi-party collaboration device.

The blockchain system receives the task contribution information sent from each multi-party computation participant device and the task contribution information sent from the multi-party collaboration device, and selects, for any one of the multi-party computation participant devices, a contribution with the highest frequency in the task contribution information sent from other multi-party computation participant devices as the final contribution of the multi-party computation participant device.

In one implementation, after the contribution of each multi-party computation participant device in terms of the target computation task is finally determined, any one of the devices participating in the target computation task (e.g., the multi-party computation collaboration device and each multi-party computation participant device) may apply for and look up the contribution of any other device participating in the target computation task.

The division of operations of any of the above methods is merely for clarity, and in implementations, these operations may be combined into one, or a certain operation may be split into a plurality of operations, which both fall into the protection scope of the present disclosure as long as a same logical relationship is included. Any insignificant modification added or any insignificant design introduced to the algorithms or processes without changing core designs of the algorithms or flows falls into the protection scope of the present disclosure.

FIG. 3 is a flowchart of another multi-party computation method based on a blockchain system according to an embodiment of the present disclosure. The multi-party computation method is applied to a multi-party computation collaboration device, and as shown in FIG. 3, the method includes the following operations S301 to S303.

At operation S301, receiving a task execution state information sent from each multi-party computation participant device.

The task execution state information is information sent, by the multi-party computation participant device after acquiring the task information of the target computation task, in the process of loading and executing the multi-party computation model in a secure execution environment to generate computation output information corresponding to the target computation task from the task computation data.

The target computation task information includes a target computation task identification, a multi-party computation model, and a task data set index. The task computation data is data extracted by the multi-party computation participant device from a proprietary database of the multi-party computation participant device based on the task data set index.

It should be noted that since the target computation task may be a multiple-time repetitive computation task, the multi-party computation participant device may send the task execution state information to the multi-party computation collaboration device once each time the computation is completed. The multi-party computation collaboration device may receive at least once the task execution state information sent from each multi-party computation participant device in the process of loading and executing the multi-party computation model in the secure execution environment. The task execution state information is used for characterizing an execution progress and an execution condition of the task in the multi-party computation participant device. The task execution state information includes at least one of a model loading state, a model execution state, an intermediate result, or computation output information.

In one implementation, the multi-party computation collaboration device may further send control information to the multi-party computation participant device based on the task execution state information sent from the multi-party computation participant device, so that the multi-party computation participant device performs a corresponding action based on the control information.

The control information may include command information for starting or stopping the target computation task, or may include a command for updating information such as computation parameters of the target computation task.

It should be noted that when the target computation task is a multiple-time repetitive computation task, the multi-party computation participant device performs computation for multiple times, and exchanges parameters, such as intermediate computation results, with other multi-party computation participant devices during the computation through the multi-party computation collaboration device. Meanwhile, in order for successful execution of the target computation task, the multi-party computation collaboration device may actively send a task evaluation notification and parameters to the multi-party computation participant device to check and determine the execution effect. Termination of the target computation task may be based on a preset computation termination condition, or may be decided by the multi-party computation collaboration device in terms of whether and when to terminate. In a multiple-time repetitive multi-party computation task, each multi-party computation participant device may perform independent computation based on its own data and information such as parameters transmitted from the multi-party computation collaboration device.

In some embodiments, during execution of the target computation task, the multi-party computation participant device may communicate with the multi-party computation collaboration device in an encrypted manner, such as the conventional security socket layer (SSL) encrypted communication or other encrypted communication methods.

In some embodiments, the multi-party computation collaboration device may encrypt communication channel data with a public key of each respective multi-party computation participant device, and accordingly, the multi-party computation participant device may decrypt the channel data with its own private key to obtain unencrypted communication channel data. For the same target computation task, the multi-party computation collaboration device may interact with different multi-party computation participant devices by different key systems or keys. While executing the target computation task, for the communication data to be interacted with the multi-party computation collaboration device or the communication data to be stored in the blockchain system, the multi-party computation participant device may encrypt the communication channel data by the public key of the multi-party computation collaboration device, or with an encryption method, parameters and encryption and decryption keys which are agreed in advance.

In one implementation, before receiving, by the multi-party computation collaboration device, task execution state information sent from the multi-party computation participant device, the method further includes the following first to third operations.

At the first operation, sending multi-party computation negotiation information to each multi-party computation participant device.

The multi-party computation negotiation information includes a target computation task identification, an identification of each multi-party computation participant device, a computation model requirement and a data set requirement.

In some embodiments, before sending, by the multi-party computation collaboration device, the multi-party computation negotiation information to each multi-party computation participant device, the method further includes: sending collaboration device registration information to the blockchain system, so that the blockchain system registers the multi-party computation collaboration device based on the collaboration device registration information.

The collaboration device registration information includes an identification of the multi-party computation collaboration device, a public key, a certificate, a supported digest, an encryption algorithm and the like where a private key of the multi-party computation collaboration device is kept by the multi-party computation collaboration device itself. The multi-party computation collaboration device generates a digest of the collaboration device registration information according to a pre-agreed rule, and signs the digest by the private key of the multi-party computation collaboration device. The signed digest is used as a component of the collaboration device registration information. Each node (e.g., each multi-party computation participant device) in the blockchain system may identify the multi-party computation collaboration device through information, such as the digest, in the collaboration device registration information of the multi-party computation collaboration device.

In some embodiments, the multi-party computation collaboration device further sends multi-party computation registration information to the blockchain system. The multi-party computation registration information includes one or more of at least one multi-party computation model, at least one multi-party computation task template, at least one multi-party computation task, or at least one contribution evaluation model for performing registration of one or more of the multi-party computation model, the multi-party computation task template, the multi-party computation task, or the contribution evaluation model, respectively, by the blockchain system.

The multi-party computation model is executable text or executable binary code, and may be stored in a blockchain system in a form of a smart contract, or may be represented by and stored in other executable modules. The multi-party computation task template is used for generating a multi-party computation task, including a computation method, the number of multi-party computation participant devices participating in multi-party computation, data sets, characteristics and the like. The multi-party computation task related information is registered by the multi-party computation collaboration device, while an information digest is generated during the registration and signed by a private key of the multi-party computation collaboration device. The digest is used for verifying a source and validity of the multi-party computation registration information. The contribution evaluation model is used for determining, after each multi-party computation participant device completes the target computation task, a contribution of each multi-party computation participant device in the multi-party computation task. The contribution is computed on the basis of validity of the actually used data set, a count of usages of the data set, a count of computations, a count of submissions of the results (including intermediate results), and the like.

At the second operation, receiving a negotiation result returned by each multi-party computation participant device based on the device state information of the multi-party computation participant device and the multi-party computation negotiation information.

The negotiation result includes a negotiation success result or a negotiation failure result.

In one implementation, under a condition that at least one of the multi-party computation participant devices returns a negotiation failure result, the multi-party computation process for the target computation task is ended.

At the third operation, sending, under a condition that all the multi-party computation participant devices return negotiation success results, task information of a target computation task to the blockchain system.

The target computation task information includes one or more of a target computation task identification, a multi-party computation model, a task data set index used by each multi-party computation participant device, a target computation task type, a target computation task parameter, an interaction mode, device information of each multi-party computation participant device participating in the computation, device information of the multi-party computation collaboration device, communication channel data encryption information, or the like.

In one implementation, after receiving the task execution state information sent from the multi-party computation participant device, the method further includes: sending control information to a corresponding multi-party computation participant device based on the task execution state information, so that the multi-party computation participant device performs a corresponding action based on the control information. The control information may include command information for starting or stopping the target computation task, or may include a command for updating information such as computation parameters of the target computation task.

It should be noted that when the target computation task is a multiple-time repetitive computation task, the multi-party computation participant device performs computation for multiple times, and exchanges parameters, such as intermediate computation results, with other multi-party computation participant devices during the computation through the multi-party computation collaboration device. Meanwhile, in order for successful execution of the target computation task, the multi-party computation collaboration device may actively send a task evaluation notification and parameters to the multi-party computation participant device to check and determine the execution effect. Termination of the target computation task may be based on a preset computation termination condition, or may be decided by the multi-party computation collaboration device in terms of whether and when to terminate. In a multiple-time repetitive multi-party computation task, each multi-party computation participant device may perform independent computation based on its own data and information such as parameters transmitted from the multi-party computation collaboration device.

In some embodiments, during execution of the target computation task, the multi-party computation participant device may communicate with the multi-party computation collaboration device in an encrypted manner, such as the conventional security socket layer (SSL) encrypted communication or other encrypted communication methods.

In some embodiments, the multi-party computation collaboration device may encrypt communication channel data with a public key of each respective multi-party computation participant device, and accordingly, the multi-party computation participant device may decrypt the channel data with its own private key to obtain unencrypted communication channel data. For the same target computation task, the multi-party computation collaboration device may interact with different multi-party computation participant devices by different key systems or keys. While executing the target computation task, for the communication data to be interacted with the multi-party computation collaboration device or the communication data to be stored in the blockchain system, the multi-party computation participant device may encrypt the communication channel data by the public key of the multi-party computation collaboration device, or with an encryption method, parameters and encryption and decryption keys which are agreed in advance.

At operation S302, generating, under a condition that each multi-party computation participant device has completed the target computation task, collaboration log information based on the task execution state information sent from each multi-party computation participant device.

The collaboration log information includes information such as a data access condition and an information synchronization condition.

At operation S303, sending the collaboration log information to the blockchain system.

By sending the collaboration log information to the blockchain system, the privacy of the log data can be protected, and the multi-party secure computation is more reliable.

In one implementation, the multi-party computation method further includes the following first to third operations.

At the first operation, acquiring, under a condition that each of the multi-party computation participant devices has completed the target computation task, task processing data corresponding to the target computation task from the blockchain system.

At the second operation, generating task contribution information based on the task processing data and a predetermined contribution evaluation model.

The task contribution information includes a contribution of each multi-party computation participant device in terms of the target computation task.

At the third operation, sending the task contribution information to the blockchain system for finally determining, by the blockchain system, the contribution of each multi-party computation participant device for the target computation task based on the task contribution information and the task contribution information sent from each multi-party computation participant device.

It should be noted that the process of computing the contribution by the multi-party computation collaboration device is similar to the process of computing the contribution by the multi-party computation participant device, and therefore, the process of computing the contribution by the multi-party computation collaboration device may refer to the process of computing the contribution by the multi-party computation participant device in the foregoing embodiments, and details are not repeated here.

In the multi-party computation method applied to the multi-party computation collaboration device provided in the embodiments of the present disclosure, firstly, a task execution state information sent from each multi-party computation participant device is received, where the task execution state information is information sent, by the multi-party computation participant device after acquiring the task information of the target computation task, in the process of loading and executing the multi-party computation model in a secure execution environment to generate computation output information corresponding to the target computation task from the task computation data; the target computation task information includes a target computation task identification, a multi-party computation model, and a task data set index; and the task computation data is data extracted by the multi-party computation participant device from a proprietary database of the multi-party computation participant device based on the task data set index. That is, the target computation task can be computed based on task data sets agreed by all parties, so that only index information of the task data sets, instead of the task data sets themselves, are shared. Therefore, data privacy of each multi-party computation participant device is protected, convenient use of the data is facilitated, and thereby the efficiency of the multi-party computation is improved. In addition, the individual multi-party computation participant devices can execute according to the same multi-party computation model to ensure certainty and consistency of the computation, as well as credibility of the computation output information, while the secure execution environment (such as a secure container) also plays a role of a sandbox, so that data, storage and communication security of the multi-party computation participant devices is guaranteed. Then, under a condition that each multi-party computation participant device has completed the target computation task, collaboration log information is generated based on the task execution state information sent from each multi-party computation participant device, and sent to the blockchain system, so that the data privacy of the multi-party computation collaboration device can be protected, and the multi-party computation is more credible.

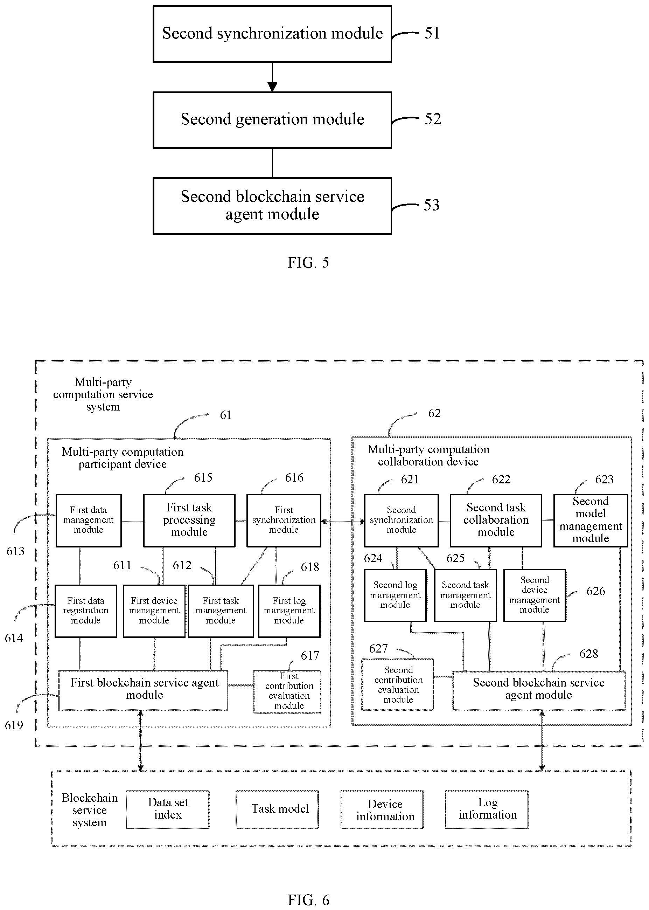

A multi-party computation service system provided in an embodiment of the present disclosure includes a multi-party computation collaboration device and a plurality of multi-party computation participant devices. Each multi-party computation participant device has a structure as shown in FIG. 4 below, while the multi-party computation collaboration device has a structure as shown in FIG. 5 below.

FIG. 4 is a schematic structural diagram of a multi-party computation participant device according to an embodiment of the present disclosure. As shown in FIG. 4, each multi-party computation participant device includes a first acquisition module 41, a first extraction module 42, a task processing module 43, a first synchronization module 44, and a first blockchain service agent module 45.

The first acquisition module 41 is configured to acquire the task information of the target computation task. The task information of the target computation task includes a target computation task identification, a multi-party computation model, and a task data set index.

The first extraction module 42 is configured to extract task computation data from a proprietary database of the multi-party computation participant device based on a corresponding task data set index.

The task processing module 43 is configured to load and execute the multi-party computation model in a secure execution environment, to generate computation output information corresponding to the target computation task from the task computation data. The computation output information includes computation result information and computation log information.

The first synchronization module 44 is configured to send, in the process of loading and executing the multi-party computation model in the secure execution environment by the task processing module 43, task execution state information at least once to the multi-party computation collaboration device, so that the multi-party computation collaboration device sends the collaboration log information to the blockchain system based on the task execution state information sent from each multi-party computation participant device.

The first blockchain service agent module 45 is configured to send computation output information to the blockchain system.

In the multi-party computation participant device provided in the embodiments of the present disclosure, the first acquisition module is configured to acquire the task information of the target computation task, the task information of the target computation task includes a target computation task identification, a multi-party computation model, and a task data set index, and the first extraction module is configured to extract task computation data from a proprietary database of the multi-party computation participant device based on a corresponding task data set index. That is, the target computation task can be computed based on task data sets agreed by all parties, so that only index information of the task data sets, instead of the task data sets themselves, are shared. Therefore, data privacy of each multi-party computation participant device is protected, and convenient use of the data is facilitated. The task processing module is configured to load and execute the multi-party computation model in a secure execution environment, to generate computation output information corresponding to the target computation task from the task computation data. That is, the individual multi-party computation participant devices can execute according to the same multi-party computation model to ensure certainty and consistency of the computation, as well as credibility of the computation output information, while the secure execution environment also plays a role of a sandbox, so that data, storage and communication security of the multi-party computation participant devices is guaranteed. The first synchronization module is configured to send, in the process of loading and executing the multi-party computation model in the secure execution environment, task execution state information at least once to the multi-party computation collaboration device, so that the multi-party computation collaboration device sends the collaboration log information to the blockchain system based on the task execution state information sent from each multi-party computation participant device, and the first blockchain service agent module is configured to send computation output information to the blockchain system, so that data privacy of each multi-party computation participant device participating in the target computation task can be protected, and the multi-party computation is more credible.

FIG. 5 is a schematic structural diagram of a multi-party computation collaboration device according to an embodiment of the present disclosure. As shown in FIG. 5, the device includes a second synchronization module 51, a second generation module 52, and a second blockchain service agent module 53.

The second synchronization module 51 is configured to receive a task execution state information sent from a multi-party computation collaboration device.

The task execution state information is information sent, by the multi-party computation participant device after acquiring the task information of the target computation task, in the process of loading and executing the multi-party computation model in a secure execution environment to generate computation output information corresponding to the target computation task from the task computation data. The target computation task information includes a target computation task identification, a multi-party computation model, and a task data set index. The task computation data is data extracted by the multi-party computation participant device from a proprietary database of the multi-party computation participant device based on the task data set index.

The second generation module 52 is configured to generate, under a condition that each of the plurality of multi-party computation participant devices has completed the target computation task, collaboration log information based on the task execution state information sent from the plurality of multi-party computation participant devices.

The second blockchain service agent module 53 is configured to send task information of a target computation task to the blockchain system, and send the collaboration log information to the blockchain system.

In the multi-party computation collaboration device provided in the embodiment of the present disclosure, the second synchronization module is configured to receive a task execution state information sent from each multi-party computation participant device, where the task execution state information is information sent, by the multi-party computation participant device after acquiring the task information of the target computation task, in the process of loading and executing the multi-party computation model in a secure execution environment to generate computation output information corresponding to the target computation task from the task computation data, the target computation task information includes a target computation task identification, a multi-party computation model, and a task data set index, and the task computation data is data extracted by the multi-party computation participant device from a proprietary database of the multi-party computation participant device based on the task data set index. That is, the target computation task can be computed based on task data sets agreed by all parties, so that only index information of the task data sets, instead of the task data sets themselves, are shared. Therefore, data privacy of each multi-party computation participant device is protected, and convenient use of the data is facilitated. In addition, the individual multi-party computation participant devices can execute according to the same multi-party computation model to ensure certainty and consistency of the computation, as well as credibility of the computation output information, while the secure execution environment also plays a role of a sandbox, so that data, storage and communication security of the multi-party computation participant devices is guaranteed. The second generation module is configured to generate, under a condition that each of the plurality of multi-party computation participant devices has completed the target computation task, collaboration log information based on the task execution state information sent from the plurality of multi-party computation participant devices, and the second blockchain service agent module is configured to send the collaboration log information to the blockchain system, so that the data privacy of the multi-party computation collaboration device can be protected, and the multi-party computation is more credible.

In one implementation, each multi-party computation participant device further includes a first task management module. The first task management module is configured to receive multi-party computation negotiation information sent from the multi-party computation collaboration device, and return a negotiation result to the multi-party computation collaboration device based on device state information of the multi-party computation participant device and the multi-party computation negotiation information. The multi-party computation negotiation information includes a target computation task identification, an identification of each multi-party computation participant device, a computation model requirement and a data set requirement.

In this implementation, the second blockchain service agent module of the multi-party computation collaboration device is configured to send, under a condition that all the multi-party computation participant devices return negotiation success results, task information of a target computation task to the blockchain system.

In one implementation, each multi-party computation participant device further includes a first data management module. The first data management module is configured to generate at least one computation data index based on original data attributed to the multi-party computation participant device, and send index registration information to the blockchain system. The index registration information includes the at least one computation data index, so that the blockchain system performs index registration of the at least one computation data index. The computation data index includes at least one of a data identification, a data type, a data length, a data digest, or an index digest.

In one implementation, the multi-party computation collaboration device further includes a second contribution evaluation module. The second blockchain service agent module is further configured to acquire, under a condition that each of the multi-party computation participant devices has completed the target computation task, task processing data corresponding to the target computation task from the blockchain system. The second contribution evaluation module is configured to generate task contribution information based on the task processing data and a predetermined contribution evaluation model. The task contribution information includes a contribution of each multi-party computation participant device in terms of the target computation task. The second blockchain service agent module is further configured to send the task contribution information to the blockchain system for finally determining, by the blockchain system, the contribution of each multi-party computation participant device for the target computation task based on the task contribution information and the task contribution information sent from each multi-party computation participant device.

FIG. 6 is a schematic structural diagram of a multi-party computation service system according to an embodiment of the present disclosure. As shown in FIG. 6, the system includes a plurality of multi-party computation participant devices 61 and a multi-party computation collaboration device 62.

In one implementation, as shown in FIG. 6, the multi-party computation participant device 61 includes: a first device management module 611, a first task management module 612, a first data management module 613, a first data registration module 614, a first task processing module 615, a first synchronization module 616, a first contribution evaluation module 617, a first log management module 618, a first blockchain service agent module 619, and the like.

The first device management module 611 is configured to register the multi-party computation participant device 61 and search for registration information of other multi-party computation participant devices and the multi-party computation collaboration device. The registration of the multi-party computation participant device is similar to that of the multi-party computation collaboration device.

The first task management module 612 is configured to negotiate a multi-party computation task with the multi-party computation collaboration device, acquire a multi-party computation model, start, close, check or record the multi-party computation task, process logs (such as generating logs or the like) during execution of the multi-party computation task, interact information with the multi-party computation participant devices, and the like.

The first data management module 613 is configured to prepare a computation data set and a data set index according to a preset rule, write the data set index into the blockchain system through the data registration module and the blockchain service agent module, and input the computation data set (including an index of the data set) to a task execution module while executing the multi-party computation task. In a multi-party computation task preparation phase, the data set used for the multi-party computation may be specified. During execution of the multi-party computation task, the first data management module inputs the pre-agreed data set to the first task processing module.

The first data registration module 614 is configured to collaborate with the first blockchain service agent module 619 according to the input of the first data management module, to write information related to the data set index into the blockchain system.

The first task processing module 615 is configured to load and execute the multi-party computation model, check and verify the multi-party computation collaboration device through the first device management module 611, obtain computation data from the first data management module, and exchange intermediate and final computation results with the multi-party computation collaboration device through the first synchronization module 616. The first task processing module 615 may further write data and process information during execution of the task into the blockchain system through the first log management module 618 and other modules. Upon receiving the data set provided by the first data management module 613, the first task processing module 615 may check the computation data set to judge whether the pre-agreed data set is used, while logging and writing related results into the blockchain system through the first log management module 618 and the first blockchain service agent module 619. Optionally, the first task processing module 615 may generate a digest for each piece of data according to a pre-agreed rule, and, instead of further checking whether the data belongs to the pre-agreed data set in real time, write related information into the blockchain system through the first log management module 618 and the first blockchain service agent module 619. Then, the contribution evaluation module is used to detect a difference of the actually used data set and the pre-agreed data set, and use the difference as an important basis for the contribution evaluation. In principle, a multi-party computation task is computed using all or some of the data entries of a pre-agreed data set during the computation process to achieve the goals of constrained computation and high credibility.

The first task processing module 615 is further configured to check and load a multi-party computation module when performing the multi-party computation task. The first task processing module 615 provides a secure execution sandbox. In the secure execution sandbox, computation data is provided by a first data management module 613, a service related to interaction with the multi-party computation collaboration device is provided by the first synchronization module 616, a service related to interaction with the blockchain system is provided by the first task management module 612 and the first log management module 618, the multi-party computation model is verified by the first task management module 612, and identity information of the multi-party computation collaboration device is verified by the first device management module 611.

It should be noted that since the multi-party computation module is an executable code provided from the outside and operated in the first task processing module 615, a secure execution sandbox is desired to protect the security of the multi-party computation participant device itself. The secure execution sandbox does not interact directly with local resources (including data, storage, communications, etc.) of the multi-party computation participant device.

The first synchronization module 616 is configured to perform task negotiation with the multi-party computation collaboration device, including negotiating a multi-party computation task, performing collaborative computation, synchronizing multi-party computation results (including intermediate process parameters), and the like.

The first log management module 618 is configured to generate, according to execution conditions of the first task processing module 615 and other modules, log information including data access conditions, information synchronization conditions, and the like in execution of the multi-party computation task. The first log management module 618 is further configured to write the log information into the blockchain system through the blockchain service agent module, and further configured for log generation, output and storage of the multi-party computation participant device.

In some embodiments, any other module of the multi-party computation participant device, except the first blockchain service agent module 619, may store and output the associated log information through the first log management module 618.

The first contribution evaluation module 617 is configured to acquire, through the first blockchain service agent module 619 according to the selected contribution evaluation computation method, information of the multi-party computation task from the blockchain system, and compute a contribution of each participant in the multi-party computation task.

The first blockchain service agent module 619 is configured to interact with the blockchain system to store or read the recorded information of the multi-party computation task. Different types of blockchain systems may have their respective blockchain service agent modules.

In one implementation, the multi-party computation collaboration device 62 includes: a second synchronization module 621, a second task collaboration module 622, a second model management module 623, a second log management module 624, a second task management module 625, a second device management module 626, a second contribution evaluation module 627, a second blockchain service agent module 628, and the like.

The second synchronization module 621 is configured to collaborate with each of the related multi-party computation participant devices, including negotiating a multi-party computation task, performing collaborative computation, synchronizing multi-party computation results (including intermediate process parameters), and the like.

The second device management module 626 is configured to handle registration and related information management of the multi-party computation collaboration device. The multi-party computation collaboration device uses the second device management module 626 to register the multi-party computation collaboration device in the blockchain system, and search and verify registration information related to the registered multi-party computation participant device. Optionally, the multi-party computation participant device may directly register itself to the multi-party computation collaboration device through the first synchronization module of the multi-party computation participant device. In other words, the multi-party computation collaboration device may directly manage the device registration information of the multi-party computation participant device, instead of through the blockchain system.

The second model management module 623 is configured to manage a multi-party computation model, and register the multi-party computation model to the blockchain system. Optionally, the multi-party computation collaboration device may directly communicate with the multi-party computation participant device to transmit the multi-party computation model. The second model management module 623 is further configured to register the multi-party computation model in the blockchain system. The registration information of the multi-party computation model includes an identification (a globally unique identifier string) of the multi-party computation model, executable code (text or binary system) for the computation model, a digest or the like. The digest is computed in a pre-agreed method according to the identification, the executable code and other registration information, and is signed by a private key of the multi-party computation collaboration device. Optionally, when the multi-party computation model is stored in the blockchain system, the multi-party computation collaboration device may encrypt the multi-party computation model, and while using the encrypted multi-party computation model, the multi-party computation participant device may interact with the multi-party computation collaboration device to obtain a decryption key to decrypt the multi-party computation model.

The second task management module 625 is configured to manage the multi-party computation task and related information. The second task management module 625 negotiates the multi-party computation task with the multi-party computation participant device through the second synchronization module 621. In negotiation of the multi-party computation task, information including the multi-party computation model to be used (a model identification, a model obtaining address, and the like), multi-party computation data set information (a list of data sets for each participant, and the like), a multi-party computation participant device (an identification, am interactive communication address, a port, a protocol, and the like) participating in computation, computation evidence information (a classification identification of the evidence, and the like), and parameters related to the multi-party computation model are required to be explicit.

The second task collaboration module 622 is configured to coordinate the multi-party computation participant devices to perform the multi-party computation task according to the selected multi-party computation model, data sets, and related parameters. For a multi-party computation task with repetitive computation, the second task collaboration module 622 provides continuous services, and coordinates and transmits relevant intermediate result parameters and related information between the multi-party computation participant devices. The second task collaboration module 622 is further configured to obtain a final result of the multi-party computation task.

The second log management module 624 is configured to generate, according to execution conditions of the second task collaboration module 622 and other modules, log information including data access conditions, information synchronization conditions, and the like in execution of the multi-party computation task. The second log management module 624 is further configured to write the log information into the blockchain system through the second blockchain service agent module 628, and further configured for generation, output and storage of log of the multi-party computation participant device. Any other module of the multi-party computation collaboration device, except the second blockchain service agent module 628, may store and output the associated log information through the second log management module 624.

The second contribution evaluation module 627 is configured to acquire, through the second blockchain service agent module 628 according to the selected contribution evaluation computation method, information of the multi-party computation task from the blockchain system, and compute a contribution of each participant in the multi-party computation task. The operations for computing the contribution of each participant in the multi-party computation task may refer to the foregoing embodiments, and thus are not repeated here. In the blockchain system, the recorded information of the multi-party computation task is attached with identification information of the multi-party computation task, and can be obtained from the blockchain system through the identification or other information.

The second blockchain service agent module 628 is configured to interact with the blockchain system to store or read the recorded information of the multi-party computation task. Different types of blockchain systems may have their respective blockchain service agent modules.

In one implementation, the second blockchain service agent module 628 is further configured to send the task contribution information to the blockchain system, so that the blockchain system finally determines the contribution of each multi-party computation participant device for the target computation task based on the task contribution information and the task contribution information sent from each multi-party computation participant device.

In one implementation, the first blockchain service agent module 619 and the second blockchain service agent module 628 may interact with the blockchain system. The blockchain system is configured to store data generated in registration, execution and other processes of multi-party computation task, and support reading related data for contribution evaluation. The data generated during the access of the associated data may be stored in the blockchain system. The present disclosure has no special technical requirements on the blockchain system, and any blockchain system which meets the data tamper resistance requirement and can ensure the data consistency, integrity and privacy will be suitable for the present disclosure. In this technical solution, the blockchain system is regarded as a trusted data storage service system for, for example, storing data set indexes, task models, device information, log information, and the like. There is a unique identification for each multi-party computation task. The unique identification is stored with the corresponding multi-party computation task data for use in finding and identifying the stored relevant multi-party computation task data in the blockchain system.

It should be noted that the present disclosure is not limited to the specific configurations and processing described in the above embodiments and shown in the figures. For convenience and simplicity of description, detailed description of a known method is omitted here, and for the specific working processes of the system, the modules and the units described above, reference may be made to corresponding processes in the foregoing method embodiments, which are not repeated here.

Those of ordinary skill in the art will appreciate that all or some operations of the above described method, functional modules/units in the system and apparatus may be implemented as software, firmware, hardware, and suitable combinations thereof. In a hardware implementation, the division between the functional modules/units mentioned in the above description does not necessarily correspond to the division of physical components; for example, one physical component may have multiple functions, or one function or operation may be performed cooperatively by several physical components. Some or all physical components may be implemented as software executed by a processor, such as a CPU, a digital signal processor or microprocessor, or implemented as hardware, or implemented as an integrated circuit, such as an application specific integrated circuit. Such software may be distributed on a computer-readable medium which may include a computer storage medium (or non-transitory medium) and communication medium (or transitory medium). As is well known to those of ordinary skill in the art, the term computer storage medium includes volatile and nonvolatile, removable and non-removable medium implemented in any method or technology for storing information, such as computer-readable instructions, data structures, program modules or other data. The computer storage medium includes, but is not limited to, an RAM, an ROM, an EEPROM, a flash or any other memory technology, a CD-ROM, a digital versatile disk (DVD) or any other optical disk storage, a magnetic cartridge, a magnetic tape, a magnetic disk storage or any other magnetic storage device, or may be any other medium used for storing the desired information and accessible by a computer. Moreover, it is well known to those ordinary skilled in the art that a communication medium typically includes a computer-readable instruction, a data structure, a program module, or other data in a modulated data signal, such as a carrier wave or other transport mechanism, and may include any information delivery medium.

It should be noted that, as used herein, the term "comprise" "include" or any variant thereof means to be non-exclusive so that a process, method, item or device including a series of elements includes not only said elements, but also other elements not explicitly listed, or inherent elements of such processes, methods, items or devices. In the absence of more limitations, an element defined by "comprising a..." does not exclude the existence of additional identical elements in the process, method, item or device including the element.

Those skilled in the art will appreciate that although some embodiments described herein include some but not other features included in other embodiments, combinations of features of different embodiments are meant to be within the scope of the embodiments and form different embodiments.

It will be appreciated that the above implementations are merely exemplary implementations for the purpose of illustrating the principle of the present disclosure, and the present disclosure is not limited thereto. Various modifications and improvements can be made by a person having ordinary skill in the art without departing from the spirit and essence of the disclosure. Accordingly, all of the modifications and improvements also fall into the protection scope of the present disclosure.

## Claims

1. A multi-party computation method based on a blockchain system, wherein the method is applied to a multi-party computation service system comprising a multi-party computation collaboration device and a plurality of multi-party computation participant devices, and the method comprises:
sending, by the multi-party computation collaboration device, task information of a target computation task to the blockchain system, wherein the task information comprises a target computation task identification, a multi-party computation model, and a task data set index used by each multi-party computation participant device;
for any one of the multi-party computation participant devices, acquiring, by the multi-party computation participant device, the task information of the target computation task;
extracting, by the multi-party computation participant device, task computation data from a proprietary database of the multi-party computation participant device based on a corresponding task data set index;
loading and executing, by the multi-party computation participant device, the multi-party computation model in a secure execution environment, to generate computation output information corresponding to the target computation task from the task computation data, wherein the computation output information comprises computation result information and computation log information;
sending, by the multi-party computation participant device, the computation output information to the blockchain system;
sending, by the multi-party computation participant device in the process of loading and executing the multi-party computation model in the secure execution environment, task execution state information at least once to the multi-party computation collaboration device; and
generating, by the multi-party computation collaboration device under a condition that each of the plurality of multi-party computation participant devices has completed the target computation task, collaboration log information based on the task execution state information sent from the plurality of multi-party computation participant devices, and sending the collaboration log information to the blockchain system.

2. The method according to claim 1, wherein before for any one of the multi-party computation participant devices, acquiring, by the multi-party computation participant device, the task information of the target computation task, the method further comprises:
receiving, by the multi-party computation participant device, multi-party computation negotiation information sent from the multi-party computation collaboration device, wherein the multi-party computation negotiation information comprises a target computation task identification, an identification of each multi-party computation participant device, a computation model requirement and a data set requirement; and
returning, by the multi-party computation participant device, a negotiation result to the multi-party computation collaboration device based on device state information of the multi-party computation participant device and the multi-party computation negotiation information,
the operation of sending, by the multi-party computation collaboration device, task information of the target computation task to the blockchain system comprises:
sending, by the multi-party computation collaboration device under a condition that all the multi-party computation participant devices return negotiation success results, the task information of the target computation task to the blockchain system.

3. The method according to claim 2, wherein before receiving, by the multi-party computation participant device, multi-party computation negotiation information sent from the multi-party computation collaboration device, the method further comprises:
generating, by the multi-party computation participant device, at least one computation data index based on original data attributed to the multi-party computation participant device, wherein the computation data index comprises at least one of a data identification, a data type, a data length, a data digest, or an index digest;
sending, by the multi-party computation participant device, index registration information to the blockchain system, wherein the index registration information comprises the at least one computation data index for performing index registration of the at least one computation data index by the blockchain system.

4. The method according to claim 1, wherein after sending, by the multi-party computation participant device, task execution state information at least once to the multi-party computation collaboration device, the method further comprises:
sending, by the multi-party computation collaboration device, control information to a corresponding multi-party computation participant device based on the task execution state information;
receiving, by the multi-party computation participant device, the control information sent from the multi-party computation collaboration device based on the task execution state information; and
performing, by the multi-party computation participant device, a corresponding action based on the control information.

5. The method according to claim 1, wherein the operation of loading and executing, by the multi-party computation participant device, the multi-party computation model in the secure execution environment, to generate computation output information corresponding to the target computation task from the task computation data comprises:
loading and executing, by the multi-party computation participant device, the multi-party computation model in the secure execution environment under a condition of determining that the multi-party computation model meets a pre-agreed model requirement; and
in the process of executing the multi-party computation model, generating, by the multi-party computation participant device under a condition of determining that the task computation data meets a pre-agreed data requirement, computation output information corresponding to the target computation task according to the task computation data, wherein the computation output information further comprises a public key signature of the multi-party computation collaboration device which is automatically generated after the multi-party computation model is executed.

6. The method according to claim 1, wherein before sending, by the multi-party computation collaboration device, task information of the target computation task to the blockchain system, the method further comprises:
sending, by the multi-party computation collaboration device, multi-party computation registration information to the blockchain system, wherein the multi-party computation registration information comprises one or more of at least one multi-party computation model, at least one multi-party computation task template, at least one multi-party computation task, or at least one contribution evaluation model for performing registration of one or more of the multi-party computation model, the multi-party computation task template, the multi-party computation task, or the contribution evaluation model, respectively, by the blockchain system.

7. The method according to claim 1, wherein the method further comprises:
acquiring, by the multi-party computation collaboration device under a condition that each of the multi-party computation participant devices has completed the target computation task, task processing data corresponding to the target computation task from the blockchain system;
generating, by the multi-party computation collaboration device, task contribution information based on the task processing data and a predetermined contribution evaluation model, wherein the task contribution information comprises a contribution of each multi-party computation participant device in terms of the target computation task; and
sending, by the multi-party computation collaboration device, the task contribution information to the blockchain system for finally determining, by the blockchain system, the contribution of each multi-party computation participant device for the target computation task based on the task contribution information sent from the multi-party computation collaboration device and the task contribution information sent from each multi-party computation participant device.

8. A multi-party computation service system, comprising a multi-party computation collaboration device and a plurality of multi-party computation participant devices, wherein each multi-party computation participant device comprises: a first acquisition module, a first extraction module, a task processing module, a first synchronization module, and a first blockchain service agent module, the multi-party computation collaboration device comprises: a second generation module and a second blockchain service agent module,
the second blockchain service agent module is configured to send task information of a target computation task to the blockchain system, wherein the task information comprises a target computation task identification, a multi-party computation model, and a task data set index used by each multi-party computation participant device;
the first acquisition module is configured to acquire the task information of the target computation task;
the first extraction module is configured to extract task computation data from a proprietary database of the multi-party computation participant device based on a corresponding task data set index;
the task processing module is configured to load and execute the multi-party computation model in a secure execution environment, to generate computation output information corresponding to the target computation task from the task computation data, wherein the computation output information comprises computation result information and computation log information;
the first blockchain service agent module is configured to send the computation output information to the blockchain system;
the first synchronization module is configured to send, in the process of loading and executing the multi-party computation model in the secure execution environment by the task processing module, task execution state information at least once to the multi-party computation collaboration device;
the second generation module is configured to generate, under a condition that each of the plurality of multi-party computation participant devices has completed the target computation task, collaboration log information based on the task execution state information sent from the plurality of multi-party computation participant devices; and
the second blockchain service agent module is further configured to send the collaboration log information to the blockchain system.

9. The multi-party computation service system according to claim 8, wherein each multi-party computation participant device further comprises a first task management module,
the first task management module is configured to receive multi-party computation negotiation information sent from the multi-party computation collaboration device, and return a negotiation result to the multi-party computation collaboration device based on device state information of the multi-party computation participant device and the multi-party computation negotiation information, wherein the multi-party computation negotiation information comprises a target computation task identification, an identification of each multi-party computation participant device, a computation model requirement and a data set requirement; and
the second blockchain service agent module is configured to send, under a condition that all the multi-party computation participant devices return negotiation success results, the task information of the target computation task to the blockchain system.

10. The multi-party computation service system according to claim 9, wherein each multi-party computation participant device further comprises a first data management module,
the first data management module is configured to generate at least one computation data index based on original data attributed to the multi-party computation participant device, and send index registration information to the blockchain system, wherein the index registration information comprises the at least one computation data index for performing index registration of the at least one computation data index by the blockchain system, and the computation data index comprises at least one of a data identification, a data type, a data length, a data digest, or an index digest.

11. The multi-party computation service system according to claim 8, wherein the multi-party computation collaboration device further comprises a second contribution evaluation module,
the second blockchain service agent module is further configured to acquire, under a condition that each of the multi-party computation participant devices has completed the target computation task, task processing data corresponding to the target computation task from the blockchain system;
the second contribution evaluation module is configured to generate task contribution information based on the task processing data and a predetermined contribution evaluation model, wherein the task contribution information comprises a contribution of each multi-party computation participant device in terms of the target computation task; and
the second blockchain service agent module is further configured to send the task contribution information to the blockchain system for finally determining, by the blockchain system, the contribution of each multi-party computation participant device for the target computation task based on the task contribution information and the task contribution information sent from each multi-party computation participant device.
